**Europäisches Patentamt**

**European Patent Office**

**Office européen des brevets**

(19)

(11) Veröffentlichungsnummer : **0 095 703**
**B1**

(12)

# EUROPÄISCHE PATENTSCHRIFT

(45) Veröffentlichungstag der Patentschrift :
**10.09.86**

(21) Anmeldenummer : **83105120.6**

(22) Anmeldetag : **24.05.83**

(51) Int. Cl.⁴ : **F 02 F   1/38**, F 02 F   1/42,
F 02 B   19/08

(54) **Zylinderkopf aus Leichtmetall für luftverdichtende, selbstzündende Brennkraftmaschinen.**

(30) Priorität : **02.06.82 DE 3220753**

(43) Veröffentlichungstag der Anmeldung :
**07.12.83 Patentblatt 83/49**

(45) Bekanntmachung des Hinweises auf die Patenterteilung : **10.09.86 Patentblatt 86/37**

(84) Benannte Vertragsstaaten :
**AT DE FR GB IT SE**

(56) Entgegenhaltungen :
**DE-A- 2 102 071**
**DE-A- 2 537 847**
**DE-A- 3 123 398**
**DE-C-   751 781**
**FR-A-   784 324**
**FR-A-   996 222**
**FR-A- 1 436 612**
**FR-A- 1 545 152**

(73) Patentinhaber : **BAYERISCHE MOTOREN WERKE**
**Aktiengesellschaft**
**Postfach 40 02 40 Petuelring 130**
**D-8000 München 40 (DE)**

(72) Erfinder : **Schausberger, Christoph**
**Reutterstrasse 73**
**D-8000 München 21 (DE)**

(74) Vertreter : **Schweiger, Erwin**
**c/o Bayerische Motoren Werke AG - AJ-35 Postfach**
**40 02 40 Petuelring 130**
**D-8000 München 40 (DE)**

**Beschreibung**

Die Erfindung geht gemäß dem Oberbegriff des unahbhängigen Patentanspruches in der für Deutschland geltenden Fassung von der als älteres nationales Recht geltenden DE-A-31 23 398 aus. Gegenstand dieser Schrift ist die Anordnung einer Vorkammer im Zylinderkopf eines Dieselmotors, wobei der zum Hauptbrennraum gerichtete, den Zylinderkopfboden durchsetzende Teil der Vorkammer zum Vermeiden thermischer Spannungen von der Wand einer Durchgangsbohrung im Zylinderkopfboden über den gesamten Umfang freigestellt ist.

Weiter zeigt die GB-A-11 31 943 für einen Dieselmotor mit einer Nebenbrennkammer im Zylinderkopf einen Kammereinsatz, der durch Freistellungen am Umfang im Bereich der Wirbelkammer sowie des Schußkanals von den Wänden des Zylinderkopfes freigestellt ist. Diese Freistellung dient der Wärmeisolierung des Brennkammereinsatzes gegenüber den wassergekühlten Wänden des Zylinderkopfes. Die Wärmeisolierung hat den Zweck, den Brennkammereinsatz zur günstigen Beeinflussung des Brennverfahrens lediglich geringfügig zu kühlen.

Bei der Fassung der für die Länder (AT, FR, GB, IT, SE) gültigen unabhängigen Patentanspruches wird bezüglich der Erfindung im Oberbegriff von der FR-A-996 222 ausgegangen.

Diese Druckschrift zeigt für einen Dieselmotor mit einer Nebenbrennkammer im Zylinderkopf einen Kammereinsatz, der am Außenumfang im Bereich der Wirbelkammer sowie des Schußkanals von den Wänden des Zylinderkopfes freigestellt ist. Diese Freistellungen dienen der Wärmeisolierung des Brennkammereinsatzes gegenüber den wassergekühlten Wänden des Zylinderkopfes. Die Wärmeisolierung hat den Zweck, den Brennkammereinsatz zur günstigen Beeinflussung des Brennverfahrens lediglich geringfügig zu kühlen.

Schließlich ist es für Wirbelkammer-Dieselmotoren auch bekannt (z. B. DE-A-25 37 847), den Brennkammereinsatz im Bereich des Wirbelkammerabschnittes durch eine verhältnismäßig breite Umfangsnut gegenüber der Wandung der Ausnehmung im Zylinderkopfboden freizustellen und den zum Hauptbrennraum gerichteten Teil des Brennkammereinsatzes zur Steuerung der Temperatur durch Wärmeabfuhr in direktem Kontakt mit dem Zylinderkopfboden anzuordnen. Damit ergibt sich im Zylinderkopfboden um den Brennkammereinsatz eine erste Heißzone. Eine zweite Heißzone ergibt sich durch den am Kolbenboden umgelenkten Brennstrahl aus dem Schußkanal des Brennkammereinsatzes. Dadurch wird der Zylinderkopfboden zwischen den beiden Heißzonen in der brennraumseitigen Bodenschicht mit einem erheblichen Wärmestau belastet. Dabei treten weiter einander entgegengerichtete Wärmedehnungen auf, die insbesondere wegen der Temperaturunterschiede innerhalb des Zylinderkopfbodens in seiner hauptbrennraumseitigen Bodenschicht zu einer Stauchung des Materials durch übermäßige Wärmedehnung führen können. Das dabei gegebene Überschreiten des elastischen Bereiches des für den Zylinderkopf verwendeten Leichtmetalls bewirkt beim Abkühlen des Zylinderkopfbodens eine Rißbildung.

Der Erfindung liegt die Aufgabe zugrunde, einen Zylinderkopf der eingangs beschriebenen Bauart aus Leichtmetall so auszubilden, daß einerseits die Wärmedehnung des stark wärmebelasteten Teiles des Zylinderkopfbodens ohne örtliche Stauchung und Rißbildung möglich ist und daß anderseits die Wärmeableitung vom die Nebenbrennkammer begrenzenden Einsatz in den gut gekühlten Teil des Zylinderkopfbodens ungehindert bleibt.

Diese Aufgabe wird durch die im wesentlichen gleichen Merkmale in den Kennzeichen der in den Oberbegriffen verschiedenen unabhängigen Patentansprüchen gelöst. Mit der Erfindung wird zwischen dem Brennkammereinsatz und der benachbarten Wandung des Zylinderkopfes bzw. Zylinderkopfbodens durch die Freistellung ein Freiraum geschaffen, in den hinein sich der Zylinderkopfboden ohne Stauchung ausdehnen kann. Zum anderen wird der Brennkammereinsatz durch Kühlung bzw. Beherrschung der Temperatur im Bereich des dem Hauptbrennraum zugewandten Teiles des Brennkammereinsatzes mit einem besonders kühlen Bereich des Zylinderkopfes bzw. Zylinderkopfbodens in Verbindung gebracht.

Zwar ist es aus der DE-A-21 02 071 bekannt, im Zylinderkopfboden einer direkt einspritzenden Diesel-Brennkraftmaschine durch eine umfängliche Freistellung um den Bund eines zusätzlichen Bundstopfens eine elastische Zone zu schaffen, durch die Längenänderungen hochwärmebelasteter Bereiche des Zylinderkopfbodens an der Ausdehnung nicht behindert und damit zu Rißbildungen führende Stauchungen vermieden werden. Jedoch wird nach der oben genannten Schrift der Bundstopfen zusätzlich intensiv gekühlt, so daß hieraus keine Anregung folgt, einen Brennkammereinsatz aus hochwarmfestem Werkstoff so weiterzubilden, daß einerseits trotz dessen notwendiger hoher Temperatur die Wärmedehnungen einer benachbarten, thermisch hochbeanspruchten Zone nicht behindert werden und andererseits die Temperatur des Brennkammereinsatzes durch wärmeleitende Verbindung mit dem gekühlten Zylinderkopfboden gesteuert wird. Die Kombination dieser Kennzeichenmerkmale nach dem Hauptanspruch ergibt in vorteilhafter Weise eine Temperatursteuerung, für die sowohl das Verhältnis der Größen der Abschnitte für Freistellung und Kühlkontakt als auch die relative Lage dieser Abschnitte zueinander am Brennkammereinsatz, insbesondere deren höhengleiche Lage, von Bedeutung sind.

Die erfindungsgemäße Freistellung kann sowohl am Außenumfang des Brennkammereinsatzes als auch am Innenumfang der Ausnehmung im Zylinderkopfboden verwirklicht werden.

Eine vorteilhafte Ausgestaltung der Erfindung ist in den identischen Ansprüchen 2 beschrieben.

In der Zeichnung ist ein Ausführungsbeispiel der Erfindung dargestellt.

Sie zeigt in

Figur 1 einen Zylinderkopf für eine Diesel-Brennkraftmaschine in Teilansicht und in

Figur 2 einen Schnitt durch den Zylinderkopfboden im Bereich des Wirbelkammer-Einsatzes gemäß der Linie II-II in Fig. 1.

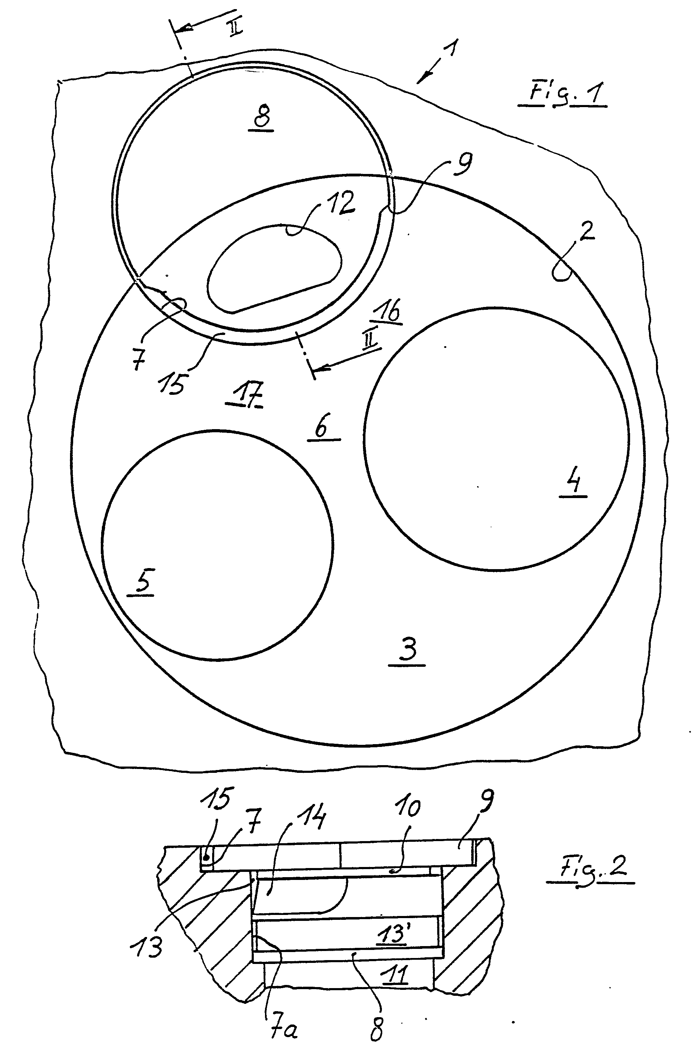

Ein nicht näher dargestellter Zylinderkopf 1 aus Leichtmetall deckt eine Zylinderbohrung 2 einer Diesel-Brennkraftmaschine ab. Im Zylinderkopfboden 3 sind jeder Zylinderbohrung 2 ein Einlaß 4 und ein Auslaß 5 zugeordnet. Zwischen dem Einlaß 4 und dem Auslaß 5 verläuft ein Steg 6 des Zylinderkopfbodens 3. In Längsrichtung des Steges 6 ist nahe der Zylinderbohrung 2 im Zylinderkopfboden 3 in einer Stufenbohrung 7, 7a (Fig. 2) ein Einsatz 8 mit einem Anschlagbund 9 angeordnet. Der Anschlagbund 9 ist durch eine umlaufende Ringnut 10 vom Einsatz 8 abgesetzt. Der Einsatz 8 besteht aus Eisenwerkstoff und begrenzt eine Wirbelkammer 11 hauptbrennraumseitig. Ein Schußkanal 12 im Einsatz 8 ist in Richtung zum Steg 6 gerichtet.

Auf der dem im Betrieb relativ heißen Steg 6 zugewandten Seite sind der Anschlagbund 9 und der Einsatz 8 jeweils etwa über den halben Außenumfang von der Wandung der Stufenbohrung 7 bzw. 7a mit einem Luftspalt freigestellt (13). Die Freistellung 13 am Einsatz 8 ist durch eine vom Grund der Ringnut 10 zum zylinrischen Außenumfang des Einsatzes 8 ansteigende Kegelmantelfläche 14 begrenzt. Die Freistellung 13 erstreckt sich über eine geringere Höhe als die Bauhöhe des Einsatzes 8.

Aufgrund der nur örtlichen, dem Steg 6 zugewandten Freistellungen 13 und 15 am Einsatz 8 bzw. am Anschlagbund 9 wird die Wärme aus dem Einsatz 8 unbehindert in einen vom heißen Steg 6 abgewandten, relativ kühlen Bereich des Zylinderkopfbodens 3 abgeleitet. Die Freistellungen 13 und 15 sind so bemessen, daß sich der durch den Brennstrahl aufgeheizte Steg 6, insbesondere seine brennraumseitige Bodenschicht, zum Anschlagbund 9 sowie zum Einsatz 8 hin frei ausdehnen kann. Stauchungen des Zylinderkopf-Materials durch Behinderung der Wärmedehnung und Rißbildungen beim Abkühlen werden auf diese Weise weitestgehend ausgeschlossen. Ein Abstimmen der Größe der Freistellungen 13 und 15 ermöglicht darüber hinaus ein Einstellen der Temperatur des Einsatzes 8 auf seine Funktionen als Wandungsteil der Wirbelkammer 11 und. als Schußkanal 12. Hierzu kann zusätzlich eine bekannte ringförmige Freistellung 13' des Einsatzes 8 vorgesehen werden.

Relativ heiße Zonen sind ferner die zum Brennstrahl seitwärts liegenden Stege 16 bzw. 17 zwischen dem Einsatz 8 und dem Einlaß 4 bzw. dem Auslaß 5. Beim Ausführungsbeispiel erstrecken sich die Freistellungen 13 und 15 an Einsatz 8 und Anschlagbund 9 jeweils über alle heißen Zonen. Es kann aber auch einer heißen Zone eine gesonderte Freistellung zugeordnet sein.

**Patentansprüche** (für die Vertragsstaaten : AT, FR, GB, IT, SE)

1. Gekühlter Zylinderkopf für Diesel-Brennkraftmaschinen,
— mit einer Nebenbrennkammer (11),
— die hauptbrennraumseitig von einem aus hochwarmfestem Werkstoff bestehenden Einsatz (8) begrenzt ist,
— der in einer Ausnehmung (7, 7a) im Zylinderkopfboden (3) mit Paßsitz angeordnet ist und
— dessen Außenfläche von der Wandung der Ausnehmung (7, 7a) unter Bildung eines Luftspaltes in dem Abschnitt seiner bodennahen Außenfläche freigestellt ist,
— wobei die Freistellung (13, 15) einer im Betrieb der Maschine relativ heißen, sich stark wärmedehnenden Zohne (Steg 6) des Zylinderkopfbodens (3) zugewandt ist, dadurch gekennzeichnet,
— daß bei einem an sich bekannten Zylinderkopf (1) aus Leichtmetall der Einsatz (8) lediglich in dem der sich stark wärmedehnenden Zone (Steg 6) zugewandten Bereich des Abschnittes seiner bodennahen Außenfläche freigestellt ist (Freistellungen 13, 15) und
— daß der übrige Abschnitt der bodennahen Außenfläche des Einsatzes (8) mit einem relativ kühlen Bereich des Zylinderkopfbodens (3) in wärmeleitender Verbindung steht.

2. Zylinderkopf nach Anspruch 1,
— mit einer Stufenbohrung (7, 7a) für einen zylindrischen Einsatz (8) mit einem Anschlagbund (9), dadurch gekennzeichnet,
— daß Anschlagbund (9) und Einsatz (8) jeweils etwa über deren halben Außenumfang von der jeweiligen Wandung der Stufenbohrung (7, 7a) freigestellt sind und
— daß die Freistellung (13) am Einsatz (8) von einer Kegelmantelfläche (14) begrenzt ist,
— die von der Kante zwischen Anschlagbund (9) und Einsatz (8) ausgehend zum Außenumfang des Einsatzes (8) hin einen zunehmenden Radius aufweist.

**Patentansprüche** (für den Vertragsstaat DE)

1. Gekühlter Zylinderkopf aus Leichtmetall für schnellaufende Diesel-Bennkraftmaschinen,
— mit einer Nebenbrennkammer (11),
— die hauptbrennraumseitig von einem aus hochwarmfestem Werkstoff bestehenden Einsatz (8) begrenzt ist,
— der in einer Ausnehmung (7, 7a) im Zylinderkopfboden (3) mit Paßsitz angeordnet ist und
— dessen Außenfläche von der Wandung der Ausnehmung (7, 7a) unter Bildung eines Luftspaltes in dem Abschnitt seiner bodennahen Außenfläche freigestellt ist,

— wobei die Freistellung (13, 15) einer im Betrieb der Maschine relativ heißen, sich stark wärmedehnenden Zohne (Steg 6) des Zylinderkopfbodens (3) zugewandt ist, dadurch gekennzeichnet,

— daß der Einsatz (8) lediglich in dem der sich stark wärmedehnenden Zone (Steg 6) zugewandten Bereich des Abschnittes seiner bodennahen Außenfläche· freigestellt ist (Freistellungen 13, 15) und

— daß der übrige Abschnitt der bodennahen Außenfläche des Einsatzes mit einem relativ kühlen Bereich des Zylinderkopfbodens (3) in wärmeleitender Verbindung steht.

2. Zylinderkopf nach Anspruch 1,
— mit einer Stufenbohrung (7, 7a) für einen zylindrischen Einsatz (8) mit einem Anschlagbund (9), dadurch gekennzeichnet,

— daß Anschlagbund (9) und Einsatz (8) jeweils etwa über deren halben Außenumfang von der jeweiligen Wandung der Stufenbohrung (7, 7a) freigestellt sind

— und daß die Freistellung (13) am Einsatz (8) von einer Kegelmantelfläche (14) begrenzt ist,

— die von der Kante zwischen Anschlagbund (9) und Einsatz (8) ausgehend zum Außenumfang des Einsatzes (8) hin einen zunehmenden Radius aufweist.

Claims (for the Contracting States : AT, FR, GB, IT, SE)

1. A cooled cylinder head for Diesel compression-ignition engines
— having a secondary combustion chamber (11),
— which is defined on the primary combustion chamber side by an insert (8) formed of highly heat-resistant material,
— which insert is arranged as a press fit in a recess (7, 7a) in the cylinder head bottom (3) and
— the outer surface of which is clear of the wall of the recess (7, 7a) so as to form an air gap in the section of its outer surface close to the bottom,
— the clearance (13, 15) facing a strongly thermally expanding zone (web 6) of the cylinder head bottom (3) which is relatively hot when the engine is in operation, characterised in that
— in the case of a light metal cylinder head (1) know *per se*, the insert (8) is clear only in the region, facing the strongly thermally expanding zone (web 6), of that section of its outer surface close to the bottom (clearances 13, 15) and
— that the remaining section of the outer surface of the insert (8) close to the bottom is in thermally conductive connection with a relatively cool region of the cylinder head bottom (3).

2. A cylinder head according to claim 1,
— having a stepped bore (7, 7a) for a cylindrical insert (8) with a stop collar (9), characterised in that
— the stop collar (9) and the insert (8) are clear of the respective wall of the stepped bore (7, 7a) in each case over about half their external circumference and
— that the clearance (13) on the insert (8) is defined by a conical surface (14)
— which has an increasing radius form the edge between stop collar (9) and insert (8) towards the external circumference of the insert (8).

Claims (for the Contracting State DE)

1. A cooled cylinder head of light metal for high-speed Diesel compression-ignition engines,
— having a secondary combustion chamber (11)
— which is defined on the primary combustion chamber side by an insert (8) formed of highly heat-resistant material
— which insert is arranged as a press fit in a recess (7, 7a) in the cylinder head bottom (3) and
— the outer surface of which is clear of the wall of the recess (7, 7a) so as to form an air gap in the section of its outer surface close to the bottom,
— the clearance (13, 15) facing a strongly thermally expanding zone (web 6) of the cylinder head bottom (3) which is relatively hot when the engine is in operation, characterised in that
— the insert (8) is clear only in the region, facing the strongly thermally expanding zone (web 6), of that section of its outer surface close to the bottom (clearances 13, 15) and
— that the remaining section of the outer surface of the insert close to the bottom is in thermally conductive connection with a relatively cool region of the cylinder head bottom (3).

2. A cylinder head according to Claim 1,
— having a stepped bore (7, 7a) for a cylindrical insert (8) with a stop collar (9), characterised in that
— the stop collar (9) and the insert (8) are clear of the respective wall of the stepped bore (7, 7a) in each case over about half their external circumference and
— that the clearance (13) on the insert (8) is defined by a conical surface (14)
— which has an increasing radius from the edge between stop collar (9) and insert (8) towards the external circumference of the insert (8).

Revendications (pour les Etats contractants : AT, FR, GB, IT, SE)

1. Culasse refroidie pour moteurs Diesel.
— comportant une chambre de combustion auxiliaire (11),
— qui est limitée, du côté de la chambre de combustion principale, par une pièce rapportée (8) qui est constituée d'un matériau réfractaire à haute température,
— qui est disposée, avec ajustement, dans un logement (7, 7a) dans le fond de la culasse (3) et

— dont la surface extérieure est dégagée de la paroi de l'évidement (7, 7a) en formant un vide dans la portion de sa surface extérieure proche du fond,

— étant précisé que le dégagement (13, 15) correspond à une zone (barrette 6) du fond de la culasse (3) relativement chaude et se dilatant fortement lorsque le moteur tourne, caractérisée

— en ce que dans le cas d'une culasse (1), connue en soi, en métal léger, la pièce rapportée (8) n'est dégagée que dans le secteur correspondant à la zone (barrette 6) qui se dilate fortement, de la portion de sa surface extérieure proche du fond (dégagement 13, 15) et

— en ce que le reste de la portion de la surface extérieure, proche du fond, de la pièce rapportée (8) est en relation conductrice de la chaleur avec un secteur relativement froid du fond de culasse (3).

2. Culasse selon la revendication 1,

— comportant un alésage étagé (7, 7a) pour une pièce rapportée cylindrique (8) avec un collet de butée (9), caractérisée

— en ce que le collet de butée (9) et la pièce rapportée (8) sont respectivement dégagés, à peu près sur leur demi périphérie extérieure, de la paroi respective de l'alésage étagé (7, 7a) et

— en ce que le dégagement (13) de la pièce rapportée (8) est limité par une surface latérale conique (14)

— qui présente un rayon qui va en croissant depuis l'arête entre le collet de butée (9) et la pièce rapportée (8) jusqu'à la périphérie extérieure de la pièce rapportée (8).

**Revendications** (pour l'Etat contractant DE)

1. Culasse refroidie en métal léger pour moteurs Diesel rapides,

— comportant une chambre de combustion auxiliaire (11),

— qui est limitée, du côté de la chambre de combustion principale, par une pièce rapportée (8) qui est constituée d'un matériau réfractaire à haute température,

— qui est disposée, avec ajustement, dans un logement (7, 7a) dans le fond de la culasse (3) et

— dont la surface extérieure est dégagée de la paroi de l'évidement (7, 7a) en formant un vide dans la portion de sa surface extérieure proche du fond,

— étant précisé que le dégagement (13, 15) correspond à une zone (barrette 6) du fond de la culasse (3) relativement chaude et se dilatant fortement lorsque le moteur tourne, caractérisé

— en ce que la pièce rapportée (8) n'est dégagée que dans le secteur, correspondant à la zone (barrette 6) qui se dilate fortement, de la portion de sa surface extérieure proche du fond (dégagement 13, 15) et

— en ce que le reste de la portion de la surface extérieure, proche du fond, de la pièce rapportée est en relation conductrice de la chaleur avec un secteur relativement froid du fond de culasse (3).

2. Culasse selon la revendication 1,

— comportant un alésage étagé (7, 7a) pour une pièce rapportée cylindrique (8) avec un collet de butée (9), caractérisée

— en ce que le collet de butée (9) et la pièce rapportée (8) sont respectivement dégagés, à peu près sur leur demi périphérie extérieure, de la paroi respective de l'alésage étagé (7, 7a) et

— en ce que le dégagement (13) de la pièce rapportée (8) est limité par une surface latérale conique (14)

— qui présente un rayon qui va en croissant depuis l'arête entre le collet de butée (9) et la pièce rapportée (8) jusqu'à la périphérie extérieure de la pièce rapportée (8).

Fig. 1

Fig. 2